# EUROPEAN PATENT APPLICATION

(11) **EP 4 727 204 A1**
(43) Date of publication of application: **15.04.2026**
(21) Application number: 24818631.4
(22) Date of filing: 04.06.2024
(51) Int. Cl.: H04W 24/10

(54) **SENSING METHOD, COMMUNICATION APPARATUS, AND COMPUTER-READABLE STORAGE MEDIUM**

(30) Priority: 06.06.2023 CN 202310666495
(71) Applicant: Beijing Unisoc Communications Technology Co., Ltd., Beijing 100083 (CN)
(72) Inventor: MA, Dawei, Beijing 100083 (CN)
(74) Representative: Casalonga
(86) International application number: PCT/CN2024/097174
(87) International publication number: WO 2024/251099

(57) **Abstract**

A sensing method, a communication apparatus, and a computer-readable storage medium. The method comprises: measuring a first sensing signal; and sending a first sensing report in response to at least one measurement result of the first sensing signal satisfying a reporting condition. The solution provided by the present application optimizes sensing signal configuration.

## Description

The present application claims priority to CN Patent Application No. 202310666495.0, entitled as "SENSING METHOD, COMMUNICATION APPARATUS, AND COMPUTER-READABLE STORAGE MEDIUM", filed with the China National Intellectual Property Administration on June 6, 2023, the entirety of which is incorporated herein by reference.

### FIELD OF TECHNOLOGY

The present application relates to communication technology, and particularly to a method for sensing, a communication apparatus and a computer-readable storage medium.

### BACKGROUND

With the further evolution of wireless communication technologies, communication apparatuses in the future such as User Equipment (UE) may not only be configured with functionality of communication but may also be responsible for some of the functionality of sensing. The sensing mentioned herein operates on the same principle as Radar, where both estimate information such as the shape and motion state of objects in the environment surrounding a communication device based on electromagnetic waves received by the communication device. It is expected that methods for sensing applied to communication devices are able to be used in many fields such as autonomous driving, intrusion detection, and safe production, and are of significant research importance.

### SUMMARY

One of the technical objectives of the present application is to provide a method for sensing, a communication apparatus, and a computer-readable storage medium, promoting optimization of the configuration of sensing signals.

In a first aspect, a method for sensing is provided in an embodiment of the present application. The method comprises: measuring a first sensing signal; and transmitting a first sensing report in response to at least one measurement result of the first sensing signal satisfying a condition for reporting.

Alternatively, the method further comprises: measuring a second sensing signal; and transmitting a second sensing report, wherein the second sensing report comprises a measurement result of the second sensing signal.

Alternatively, before the measuring the second sensing signal, the method further comprises: receiving a trigger signaling, wherein the trigger signaling is used to trigger the measurement of the second sensing signal and/or the transmission of the second sensing report.

Alternatively, the first sensing report comprises at least one of: time of arrival of at least one sensing signal of the first sensing signal or difference in time of arrival of sensing signals of the first sensing signal; angle of arrival of at least one sensing signal of the first sensing signal; information on doppler of at least one sensing signal of the first sensing signal; information on resource index of at least one sensing signal of the first sensing signal; information on quality of channel corresponding to at least one sensing signal of the first sensing signal; and time of measurement corresponding to the first sensing report.

Alternatively, the first sensing report further comprises: configuration assistance information, wherein the configuration assistance information is used to assist resource configuration of a second sensing signal and/or configuration of a second sensing report.

Alternatively, the second sensing report comprises at least one of: time of arrival of at least one sensing signal of the second sensing signal or difference in time of arrival of sensing signals of the second sensing signal; angle of arrival of at least one sensing signal of the second sensing signal; information on doppler of at least one sensing signal of the second sensing signal; information on resource index of at least one sensing signal of the second sensing signal; information on quality of channel corresponding to at least one sensing signal of the second sensing signal; and time of measurement corresponding to the second sensing report.

Alternatively, the second sensing signal satisfies at least one of: the second sensing signal and the first sensing signal are the same or different; the overhead of resources of the second sensing signal is greater than that of the first sensing signal; the bandwidth of the second sensing signal is greater than that of the first sensing signal; the density in frequency domain of the second sensing signal is greater than that of the first sensing signal; the duration of the second sensing signal is greater than that of the first sensing signal; and the gap in time domain of the second sensing signal is less than that of the first sensing signal.

In a second aspect, a method for sensing is further provided in an embodiment of the present application. The method comprises: receiving a first sensing report, wherein the first sensing report is reported in response to at least one measurement result of a first sensing signal satisfying a condition for reporting.

Alternatively, the method further comprises: receiving a second sensing report, wherein the second sensing report comprises a measurement result of the second sensing signal.

Alternatively, before the receiving the second sensing report, the method further comprises: transmitting a trigger signaling, wherein the trigger signaling is used to trigger the measurement of the second sensing signal and/or the transmission of the second sensing report.

Alternatively, the first sensing report comprises: time of arrival of at least one sensing signal of the first sensing signal or difference in time of arrival of sensing signals of the first sensing signal; angle of arrival of at least one sensing signal of the first sensing signal; information on doppler of at least one sensing signal of the first sensing signal; information on resource index of at least one sensing signal of the first sensing signal; information on quality of channel corresponding to at least one sensing signal of the first sensing signal; and time of measurement corresponding to the first sensing report.

Alternatively, the first sensing report further comprises: configuration assistance information, wherein the configuration assistance information is used to assist resource configuration of a second sensing signal and/or configuration of a second sensing report.

Alternatively, the second sensing report comprises at least one of: time of arrival of at least one sensing signal of the second sensing signal or difference in time of arrival of sensing signals of the second sensing signal; angle of arrival of at least one sensing signal of the second sensing signal; information on doppler of at least one sensing signal of the second sensing signal; information on resource index of at least one sensing signal of the second sensing signal; information on quality of channel corresponding to at least one sensing signal of the second sensing signal; and time of measurement corresponding to the second sensing report.

Alternatively, the second sensing signal satisfies at least one of: the second sensing signal and the first sensing signal are the same or different; the overhead of resources of the second sensing signal is greater than that of the first sensing signal; the bandwidth of the second sensing signal is greater than that of the first sensing signal; the density in frequency domain of the second sensing signal is greater than that of the first sensing signal; the duration of the second sensing signal is greater than that of the first sensing signal; and the gap in time domain of the second sensing signal is less than that of the first sensing signal.

In a third aspect, a communication apparatus is provided in an embodiment of the present application. The apparatus comprises: a processing module configured to measure a first sensing signal; and a communication module configured to transmit a first sensing report in response to at least one measurement result of the first sensing signal satisfying a condition for reporting.

In a fourth aspect, a communication apparatus is provided in an embodiment of the present application. The apparatus comprises: a communication module configured to receive a first sensing report, wherein the first sensing report is reported in response to at least one measurement result of a first sensing signal satisfying a condition for reporting.

In a fifth aspect, a computer-readable storage medium is provided in an embodiment of the present application. The computer-readable storage medium has computer programs stored thereon. The computer programs, when being executed by a processor, cause the method for sensing provided in any one of the above aspects to be performed.

In a sixth aspect, a communication apparatus is provided in an embodiment of the present application. The communication apparatus includes a memory and a processor. The memory has computer programs, executable on the processor, stored thereon. The computer programs, when being executed by the processor, cause the steps of the method for sensing provided in the first aspect to be performed.

In a seventh aspect, a communication apparatus is provided in an embodiment of the present application. The communication apparatus includes a memory and a processor. The memory has computer programs, executable on the processor, stored thereon. The computer programs, when being executed by the processor, cause the steps of the method for sensing provided in the second aspect to be performed.

In an eighth aspect, a chip (or a communication apparatus) is provided in an embodiment of the present application. The chip has computer programs stored thereon. The computer programs, when being executed by the chip, cause the method for sensing provided in any one of the above aspects to be performed.

In a ninth aspect, a chip module is provided in an embodiment of the present application. The chip module has computer programs stored thereon. The computer programs, when being executed by the chip module, cause method for sensing provided in any one of the above aspects to be performed.

In a tenth aspect, a computer program product is provided in an embodiment of the present application. The computer program product includes computer programs. The computer programs, when being executed by a computer, cause the computer to execute the method for sensing provided in any of the above aspects.

In an eleventh aspect, a communication system is provided in an embodiment of the present application. The communication system includes means for performing the method provided in the first aspect and means for performing the method provided in the second aspect.

Compared with the prior art, the technical solutions of the embodiments of the present application have the following beneficial effects.

In the solutions of the embodiments of the present application, the communication apparatus measures a first sensing signal; and transmits a first sensing report in response to at least one measurement result of the first sensing signal satisfying a condition for reporting. In the above solutions, the communication apparatus reports the first sensing report when it determines that at least one measurement result of the first sensing signal satisfies the condition for reporting. The first communication apparatus is not only enabled to promptly learn the sensing result but also is promoted for configuration of subsequent sensing in a more reasonable way according to the first sensing report.

Further, in the solutions of the embodiments of the present application, the first sensing signal is measured first. The measurement of the second sensing signal is triggered upon the report of the first sensing report, to obtain a sensing result with higher precision. Such a solution may avoid using sensing signals with large resource overhead for measurement in a continuous manner to obtain measurement results with high precision, facilitating the reduction of the overall resource overhead of sensing signals while ensuring the precision of the sensing results. The above solutions may also avoid using complex methods for measurement in a continuous manner, facilitating the reduction of the complexity and power consumption of measurement for sensing.

### BRIEF DESCRIPTION OF THE DRAWINGS

FIG. 1 is a schematic diagram of an application scenario of a method for sensing according to embodiments of the present application;
FIG. 2 is a schematic diagram of a flowchart of a method for sensing according to embodiments of the present application;
FIG. 3 is a schematic diagram of a flowchart of another method for sensing according to embodiments of the present application;
FIG. 4 is a schematic diagram of a flowchart of yet another method for sensing according to embodiments of the present application;
FIG. 5 is a schematic diagram of a structure of a communication apparatus according to embodiments of the present application;
FIG. 6 is a schematic diagram of a structure of another communication apparatus according to embodiments of the present application;
FIG. 7 is a schematic diagram of a hardware structure of a communication apparatus according to embodiments of the present application; and
FIG. 8 is a schematic diagram of a flowchart of yet another method for sensing according to embodiments of the present application.

### DETAILED DESCRIPTION

It should be noted that the communication systems suitable for the embodiments of the present application include, but are not limited to, third-generation (3G) systems, Long Term Evolution (LTE) systems, fourth-generation (4G) systems, fifth-generation (5G) systems, New Radio (NR) systems, and future evolved systems or various integrated communication systems. The 5G system may be a Non-Standalone (NSA) 5G system or a Standalone (SA) 5G system. The solutions of the embodiments of the present application may also be applicable to various new future communication systems, for example, 6G, 7G, etc.

The terminal in the embodiments of the present application may refer to various forms of a User Equipment (UE), an access terminal, a subscriber unit, a subscriber station, a mobile station, a Mobile Station (MS), a remote station, a remote terminal, a mobile device, a user terminal, a terminal equipment, a wireless communication device, a user agent, or a user apparatus. The terminal may also be a cellular phone, a cordless phone, a Session Initiation Protocol (SIP) phone, a Wireless Local Loop (WLL) station, a Personal Digital Assistant (PDA), a handheld device with wireless communication function, a computing device, or another processing device connected to a wireless modem, an in-vehicle device, a wearable device, a terminal in a future 5G network, or a terminal in a future evolved Public Land Mobile Network (PLMN), etc. This is not limited in the embodiments of the present application.

The network device in the embodiments of the present application may also be referred to as an access network device. For example, it may be a base station (BS) (also referred to as base station equipment). A network device is an apparatus deployed in a Radio Access Network (RAN) to provide functions of wireless communication. For example, the device providing functions of a base station in a second-generation (2G) network includes a Base Transceiver Station (BTS). The device providing functions of a base station in a third-generation (3G) network includes a NodeB. The device providing functions of a base station in a fourth-generation (4G) network includes an evolved NodeB (eNB). The device providing functions of a base station in a Wireless Local Area Network (WLAN) is an Access Point (AP). The device providing functions of a base station in NR is a next-generation node base station (gNB), and a next-generation evolved NodeB (ng-eNB), where the gNB communicates with a terminal device using NR, and the ng-eNB communicates with a terminal device using Evolved Universal Terrestrial Radio Access (E-UTRA), and both the gNB and the ng-eNB may be connected to a 5G core network. The network device in the embodiments of the present application also encompasses a device providing functions of a base station in future new communication systems, etc.

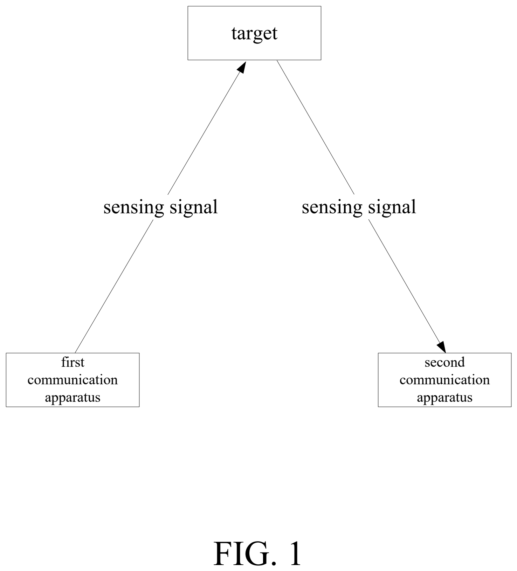

Referring to FIG.1, FIG. 1 is a schematic diagram of an application scenario of a method for sensing according to embodiments of the present application.

As shown in FIG. 1, the method provided by the embodiments of the present application may be applied to a scenario of multi-station sensing. The multi-station sensing refers to obtaining results for sensing through collaboration among a plurality of communication apparatuses.

As shown in FIG. 1, a first communication apparatus is a transmitter of a sensing signal, and a second communication apparatus is a receiver of the sensing signal.

Specifically, the first communication apparatus may transmit the sensing signal, and the second communication apparatus may receive the sensing signal and perform sensing according to the received sensing signal.

The sensing signal may be a predefined reference signal. For example, it may be a Channel State Information-Reference Signal (CSI-RS), a Synchronization Signal Block (SSB), a Positioning Reference Signal (PRS), or a Sounding Reference Signal (SRS), etc. Alternatively, the sensing signal may also be a newly defined reference signal, which is not limited in the embodiments of the present application.

It should be noted that the sensing signal received by the second communication apparatus may be the sensing signal per se that was transmitted by the first communication apparatus. In other words, the sensing signal transmitted by the first communication apparatus may be transmitted directly to the second communication apparatus without encountering any object. The sensing signal received by the second communication apparatus may also be a signal formed upon encountering a target, for example, a reflected signal, etc., which is not limited in any way in the embodiments of the present invention. In a specific implementation, the first communication apparatus may be a network device, and the second communication apparatus may be a terminal. Or, the first communication apparatus may be a first terminal, and the second communication apparatus may be a second terminal. Or, the first communication apparatus may be a first network device, and the second communication apparatus may be a second network device. Or, the first communication apparatus may be a terminal, and the second communication apparatus may be a network device.

Further, the solutions of the embodiments of the present application may be applied to a scenario of single-station sensing. The single-station sensing obtains results for sensing by a same communication apparatus transmitting and receiving by itself. Specifically, the first communication apparatus may transmit a sensing signal and measure the sensing signal transmitted by itself to obtain a result for sensing. The communication device performing single-station sensing may be a terminal or a network device.

The specific embodiments of the present application are illustrated in detail below with reference to the accompanying drawings.

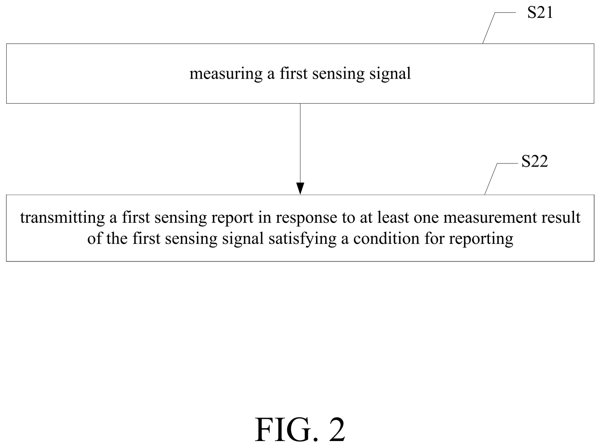

Referring to FIG.2, FIG. 2 is a schematic diagram of a flowchart of a method for sensing according to embodiments of the present application. In a scenario of multi-station sensing, the method shown in FIG. 2 may be applied to the above second communication apparatus, or the method shown in FIG. 2 may be applied to a communication apparatus performing single-station sensing.

The method shown in FIG. 2 may include S21 and S22. The "S" in the numbering of each step in the present application represents "Step".

S21, measuring a first sensing signal.

S22, transmitting a first sensing report in response to at least one measurement result of the first sensing signal satisfying a condition for reporting.

In a scenario of multi-station sensing, in S21, the first communication apparatus transmits the first sensing signal. Accordingly, the second communication apparatus receives the first sensing signal and measures the first sensing signal to obtain a measurement result of the first sensing signal. In S22, the second communication apparatus transmits the first sensing report to the first communication apparatus in response to at least one measurement result of the first sensing signal satisfying a condition for reporting. Specifically, the second communication apparatus may determine whether various measurement results of the first sensing signal satisfy the condition for reporting. The second communication apparatus may transmit the first sensing report to the first communication apparatus in response to at least one measurement result of the first sensing signal satisfying the condition for reporting. In a specific implementation, the first sensing signal may include a plurality of sensing signals, where the plurality of sensing signals may be configured at different positions in time domain and/or frequency domain. For example, the first sensing signal may be a set of periodic sensing signals.

The measurement result of the first sensing signal is obtained through measurement of the first sensing signal. Specifically, the measurement result of the first sensing signal may include at least one of: time of arrival of at least one sensing signal of the first sensing signal, difference in time of arrival of sensing signals of the first sensing signal, information on doppler of at least one sensing signal of the first sensing signal, information on quality of channel corresponding to at least one sensing signal of the first sensing signal, and time of measurement for at least one sensing signal of the first sensing signal.

The information on quality of channel may be any of: Reference Signal Receiving Power (RSRP), Signal-to-noise and Interference Ratio (SINR), or Reference Signal Received Quality (RSRQ), but is not limited thereto. Further, the time of measurement may refer to the time instant or duration of the measurement of the sensing signal.

In S22, the second communication apparatus transmits the first sensing report to the first communication apparatus in response to at least one measurement result of the first sensing signal satisfying a condition for reporting.

For example, when any measurement result of the first sensing signal satisfies the condition for reporting corresponding to the measurement result, the second communication apparatus transmits the first sensing report to the first communication apparatus.

As another example, when one or more specific measurement results of the first sensing signal satisfy their corresponding conditions for reporting, the second communication apparatus transmits the first sensing report to the first communication apparatus.

In a specific implementation, the condition for reporting may be a range of values. Satisfying the condition for reporting may indicate that the actual measurement result falls within the corresponding range of values. Specifically, for each measurement result, the second communication apparatus may determine whether the measurement result falls within the range of values corresponding to the measurement result. If yes, the second communication apparatus may determine that the measurement result satisfies the condition for reporting.

Taking RSRP as an example, if the RSRP which is actually measured is greater than or equals to a threshold for received power, it may be determined that the RSRP satisfies the condition for reporting.

In the solutions of the embodiments of the present application, the second communication apparatus transmits the first sensing report to the first communication apparatus to inform the first communication apparatus that a target object is sensed or a target event is detected.

In an embodiment of the present application, the first sensing report may include information of notification, where the information of notification may be used to notify the first communication apparatus that a target event is sensed or detected. Taking an application scenario of intrusion detection as an example, if at least one measurement result of the first sensing signal satisfies the condition for reporting, the second communication apparatus may determine that an intrusion is sensed, and thus transmit the first sensing report to the first communication apparatus to inform the first communication apparatus that an event of intrusion is detected.

In a specific implementation, the first sensing report may include at least one measurement result of the first sensing signal. Specifically, the first sensing report may include at least one of: time of arrival of at least one sensing signal of the first sensing signal, difference in time of arrival of sensing signals of the first sensing signal, angle of arrival of at least one sensing signal of the first sensing signal, information on doppler of at least one sensing signal of the first sensing signal, and information on quality of channel corresponding to at least one sensing signal of the first sensing signal.

In an embodiment of the present application, the first sensing report may further include at least one of: information on resource index of at least one sensing signal of the first sensing signal, and time of measurement corresponding to the first sensing report. The sensing signal corresponding to the information on resource index in the first sensing report may be the sensing signals in the first sensing signal whose measurement results satisfy the condition for reporting. The time of measurement corresponding to the first sensing report may be the time of measurement for the sensing signals in the first sensing signal that satisfy the condition for reporting.

In another embodiment of the present application, the first sensing report may include a physical state of an object being sensed, a position of the object, a motion state (such as moving speed) of the object, and a distance from the second communication apparatus, etc. The physical state of the object may be calculated based on the above measurement results of the first sensing signal.

Further, the first sensing report may be transmitted via a physical layer channel or higher layer signaling. For example, when the second communication apparatus is a terminal and the first communication apparatus is a network device. The first sensing report may be carried on a Physical Random Access Channel (PRACH), or carried on a Physical Uplink Control Channel (PUCCH), or carried in Medium Access Control-Control Element (MAC CE) signaling, etc.

Thus, in the above solution, in a scenario of multi-station sensing, when the second communication apparatus determines that at least one measurement result of the first sensing signal satisfies the condition for reporting, it transmits the first sensing report to the first communication apparatus. In this way, not only the first communication apparatus is enabled to learn that the second communication apparatus has sensed a target event or target object promptly, but also sensing signals may be configured in a more reasonable manner for subsequent sensing based on the content of the first sensing report.

In a scenario of single-station sensing, in S21, a third communication apparatus may transmit and receive the first sensing signal, and measure the received first sensing signal to obtain the measurement result of the first sensing signal.

S22, the third communication apparatus transmits or reports a first sensing report in response to at least one measurement result of the first sensing signal satisfying a condition for reporting.

For example, when any measurement result of the first sensing signal satisfies the condition for reporting corresponding to the measurement result, the third communication apparatus may transmit the first sensing report to a fourth communication apparatus.

As another example, when one or more specific measurement results of the first sensing signal satisfy their corresponding conditions for reporting, the third communication apparatus transmits the first sensing report to the fourth communication apparatus.

In the solutions of the embodiments of the present application, the third communication apparatus transmits the first sensing report to the fourth communication apparatus, which may promptly inform the fourth communication apparatus that a target object is sensed or a target event is detected.

In a specific implementation, if the third communication apparatus is a terminal, the fourth communication apparatus is an access network device. If the third communication apparatus is an access network device, the fourth communication apparatus is a core network device. In application scenarios where communication apparatuses are used for sensing, in order to ensure the sensing is in real-time, the second communication apparatus needs to perform measurement for sensing continuously. Further, in order to ensure the accuracy of sensing, it is desirable for the sensing signals to occupy a significant portion of time and frequency resources. However, in some scenarios, when the probability of occurrence of a sensed target is low, measuring sensing signals that occupy a significant portion of time and frequency resources in a continuous manner will lead to a waste of resource.

For example, in a scenario of intrusion detection, the probability of occurrence of an intruder, as the target to be sensed, is relatively low. On the one hand, this will increase the complexity and power consumption of measurement by the terminal. If the terminal is configured by the network device to measure and report sensing results with high-precision in a continuous manner, the time and frequency resource overhead on the sensing signal would be large, and it will also lead to an increase in the complexity and power consumption of measurement by the terminal. In this regard, in an embodiment of the present application, the first sensing signal is first used for preliminary sensing. When a target is sensed, the sensing of a second sensing signal is triggered to obtain a sensing result with high-precision.

After S12, the communication apparatus that performs measurement may measure the second sensing signal. The communication apparatus that performs measurement may refer to an apparatus that measures the second sensing signal. For example, it may be the second communication apparatus or the third communication apparatus.

**In** an embodiment of the present application, the second sensing signal may be configured according to the first sensing report. **In** other words, the first sensing report may be used at least to configure the second sensing signal.

For example, the communication apparatus (such as the first communication apparatus or the fourth communication apparatus) receiving the first sensing report may configure the second sensing signal for the communication apparatus that performs measurement.

As another example, the communication apparatus that performs measurement may configure the second sensing signal based on the first sensing report.

Further, by measuring the second sensing signal, a second sensing report may be generated. **In** the solutions of the embodiments of the present application, the precision of the second sensing report is higher than that of the first sensing report.

More contents about the second sensing signal and the second sensing report may be found with reference to the related descriptions below.

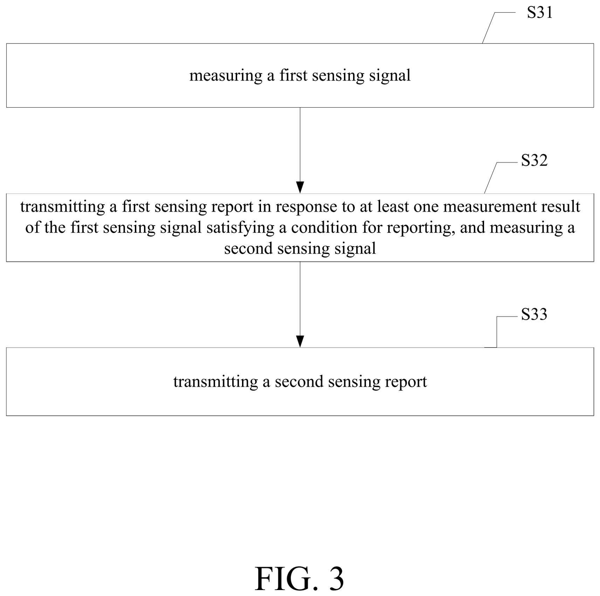

Referring to FIG.3, FIG. 3 is a schematic diagram of a flowchart of another method for sensing according to embodiments of the present application. The method shown in FIG. 3 may be performed by the above second communication apparatus or third communication apparatus. The method shown in FIG. 3 may include S31 to S33.

S31, measuring a first sensing signal.

S32, transmitting a first sensing report in response to at least one measurement result of the first sensing signal satisfying a condition for reporting, and measuring a second sensing signal.

S33, transmitting a second sensing report.

Specific contents about transmitting the first sensing report in S31 and S32 may be found with reference to the related descriptions above regarding FIG. 2, and details are not repeated herein.

In a specific implementation, the first sensing report is transmitted within a preset duration after it is determined that at least one measurement result of the first sensing signal satisfies the condition for reporting. That is, the communication apparatus that performs measurement reports the first sensing report immediately after determining that a target is sensed.

Further, if at least one measurement result of the first sensing signal satisfies the condition for reporting, in the solutions of the embodiments of the present application, the communication apparatus that performs measurement also measures the second sensing signal. Specifically, the communication apparatus that performs measurement measures the second sensing signal in response to at least one measurement result of the first sensing signal satisfying the condition for reporting.

It should be noted that the sequence in which the communication apparatus that performs measurement transmits the first sensing report and measures the second sensing signal is not limited in the present embodiment.

As an implementation, the communication apparatus that performs measurement may measure the second sensing signal and then transmit the first sensing report.

As another implementation, the communication apparatus that performs measurement may transmit the first sensing report and then measure the second sensing signal.

As yet another implementation, the communication apparatus that performs measurement may measure the second sensing signal and transmit the first sensing report simultaneously. Specifically, the second sensing signal may include a plurality of sensing signals, where the plurality of sensing signals may be configured at different positions in time domain and/or frequency domain. For example, the second sensing signal may be a set of periodic sensing signals.

In an embodiment of the present application, the second sensing signal and the first sensing signal may be the same. Specifically, the second sensing signal may be CSI-RS, SSB, PRS, and is not limited thereto. The type of the second sensing signal may be the same as that of the first sensing signal, or the type of the second sensing signal may be different from that of the first sensing signal. Further, the configuration of the second sensing signal and the configuration of the first sensing signal may be the same.

Further, in S32, when the configuration of the second sensing signal and the configuration of the first sensing signal are the same, the method for measuring the second sensing signal may be more complex than that for measuring the first sensing signal. In other words, the communication apparatus that performs measurement uses a more complex method for measuring to measure the second sensing signal to obtain measurement results with higher precision.

In another embodiment of the present application, compared to the first sensing signal, the second sensing signal occupies more time and frequency resources. In other words, the overhead of resources of the second sensing signal may be greater than that of the first sensing signal. Since the overhead of resources of the second sensing signal is greater than that of the first sensing signal, a sensing result with higher precision may be obtained by measuring the second sensing signal.

More specifically, the overhead of resources of the second sensing signal being greater than that of the first sensing signal may include at least one of:
(1) The bandwidth of the second sensing signal is greater than that of the first sensing signal.
   Specifically, the bandwidth of the second sensing signal being greater than that of the first sensing signal allows obtaining a sensed distance with higher precision by measuring the second sensing signal.
(2) The density in frequency domain of the second sensing signal is greater than that of the first sensing signal. Specifically, the density in frequency domain of the second sensing signal being greater than that of the first sensing signal results in a larger sensed range of the second sensing signal than that of the first sensing signal.
(3) The gap in time domain of the second sensing signal is less than that of the first sensing signal.

In other words, the density in time domain of the second sensing signal is greater than that of the first sensing signal. For example, the second sensing signal may be a set of periodic sensing signals, and the period of the second sensing signal is less than that of the first sensing signal.

In a specific implementation, the gap in time domain of the second sensing signal being less than that of the first sensing signal allows obtaining a sensed speed with higher precision by measuring the second sensing signal.

(4) The duration of the second sensing signal is greater than that of the first sensing signal.

Specifically, the duration of the second sensing signal being greater than that of the first sensing signal results in a larger range for speed sensing obtained by measuring the second sensing signal than that obtained by measuring the first sensing signal.

Further, the second communication apparatus measures the second sensing signal to obtain a measurement result of the second sensing signal. In the solution of the present embodiment, the overhead of resources of the second sensing signal may be greater than that of the first sensing signal. By measuring the second sensing signal, measurement results with higher precision may be obtained.

In a specific implementation, the measurement result of the second sensing signal may include at least one of: time of arrival of at least one sensing signal of the second sensing signal, difference in time of arrival of sensing signals of the second sensing signal, angle of arrival of at least one sensing signal of the second sensing signal, information on doppler of at least one sensing signal of the second sensing signal, and information on quality of channel corresponding to at least one sensing signal of the second sensing signal.

In S33, the communication apparatus that performs measurement transmits the second sensing report.

For example, the second communication apparatus may transmit the second sensing report to the first communication apparatus in response to obtaining the measurement result of the second sensing signal.

As another example, the third communication apparatus may transmit the second sensing report to the fourth communication apparatus in response to obtaining the measurement result of the second sensing signal.

In a specific implementation, the second sensing report may include the measurement result of the second sensing signal. Specifically, various measurement results of the second sensing signal may all be included in the second sensing report.

More specifically, the second sensing report may include at least one of: time of arrival of at least one sensing signal of the second sensing signal, difference in time of arrival of sensing signals of the second sensing signal, angle of arrival of at least one sensing signal of the second sensing signal, information on doppler of at least one sensing signal of the second sensing signal, and information on quality of channel corresponding to at least one sensing signal of the second sensing signal.

In an embodiment of the present application, the second sensing report may further include at least one of: information on resource index of at least one sensing signal of the second sensing signal, and time of measurement corresponding to the second sensing report, etc. The sensing signal corresponding to the information on resource index in the second sensing report may be the sensing signal corresponding to the measurement result in the second sensing report. The time of measurement corresponding to the second sensing report may be the time of measurement of the sensing signal corresponding to the measurement result.

In a specific implementation, the second sensing report may be transmitted via a physical layer or higher layer signaling.

From the above, in the solution of the present embodiment, the sensing results are reported in two stages. A preliminary sensing result is reported through the first sensing report in the first stage, and a sensing result with high precision is reported through the second sensing report in the second stage. Firstly, measurement on the first sensing signal with low precision is performed, and measurement of the second sensing signal with high precision is triggered when at least one measurement result of the first sensing signal satisfies the condition for reporting. For example, in a scenario for intrusion detection, the first sensing signal is used for monitoring the intrusion event. When a report indicating an intrusion event is received, the measurement of the second sensing signal is triggered for intrusion target detection.

In this way, using sensing signals with large overhead of resources in a continuous manner to obtain measurement results with high precision may be avoided, which facilities the reduction of the overall overhead of resources of sensing signals. Or using complex methods for measurement in a continuous manner may be avoided, which facilities the reduction of the complexity and power consumption of measurement for sensing.

More contents about the method for sensing shown in FIG. 3 may be found with reference to the related descriptions provided in other embodiments of the present document, and details are not repeated herein.

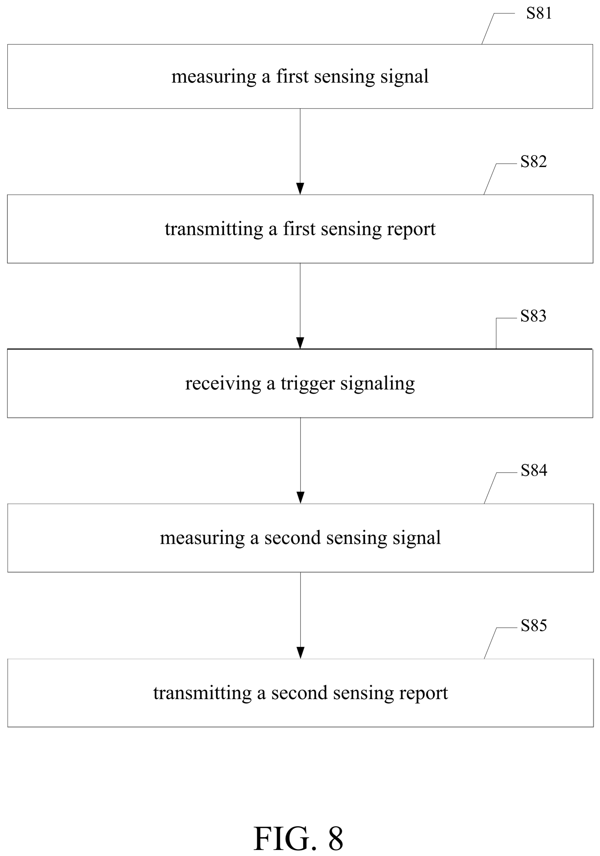

Referring to FIG. 8, FIG. 8 is a schematic diagram of a flowchart of yet another method for sensing according to embodiments of the present application. The method shown in FIG. 8 is applied to the above communication apparatus that performs measurement. The method shown in FIG. 8 may include S81 to S85.

S81, Measuring a first sensing signal.

S82, Transmitting a first sensing report.

The specific contents of S81 and S82 may be found with reference to the related descriptions above, which will not be repeated herein.

S83, Receiving a trigger signaling.

Specifically, after receiving the first sensing report, the communication apparatus that receives the first sensing report may transmit a trigger signaling to the communication apparatus that performs measurement.

The trigger signaling may be used to trigger the measurement of the second sensing signal and/or the transmission of the second sensing report. That is, the trigger signaling may be used to trigger the second communication apparatus to measure the second sensing signal and/or used to trigger the second communication apparatus to transmit the second sensing report.

S84, Measuring the second sensing signal.

Specifically, the communication apparatus that performs measurement may measure the second sensing signal in response to receiving the trigger signaling.

S85, Transmitting the second sensing report.

The specific contents of S84 and S85 may be found with reference to the related descriptions above, which will not be repeated herein.

More contents about the method for sensing shown in FIG. 8 may be found with reference to the related descriptions provided in other embodiments of the present document, and details are not repeated herein.

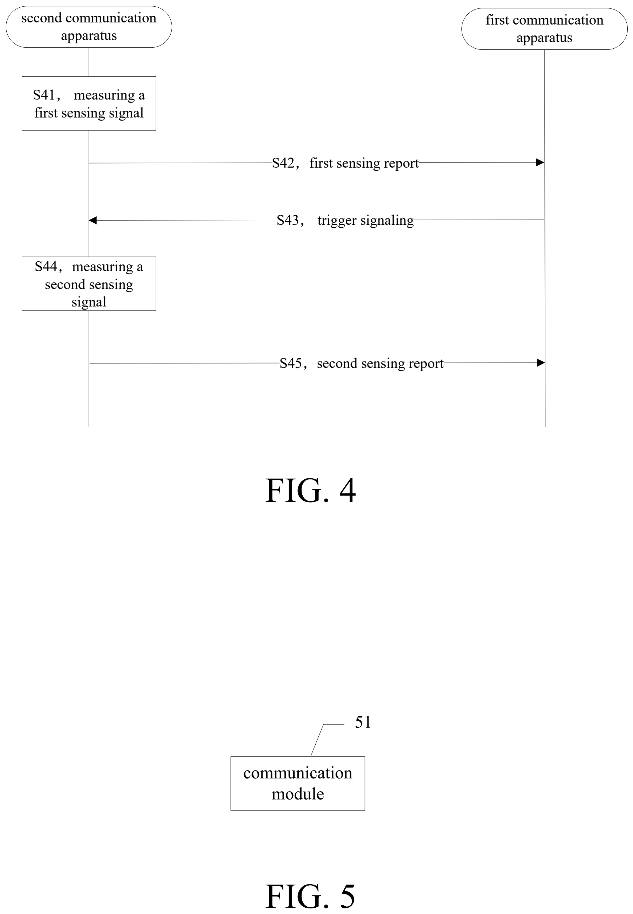

Referring to FIG. 4, FIG. 4 is a schematic diagram of a flowchart of yet another method for sensing according to embodiments of the present application. The method shown in FIG. 4 may be applied to a scenario of multi-station sensing. The method shown in FIG. 4 may include S41 to S45.

S41, A second communication apparatus measures a first sensing signal.

S42, The second communication apparatus transmits a first sensing report to a first communication apparatus.

The specific contents of S41 and S42 may be found with reference to the related descriptions above, which will not be repeated herein.

S43, The first communication apparatus transmits a trigger signaling to the second communication apparatus.

Specifically, in response to receiving the first sensing report, the first communication apparatus may transmit a trigger signaling to the second communication apparatus. The trigger signaling may be used to trigger the measurement of a second sensing signal and/or the transmission of a second sensing report. That is, the trigger signaling may be used to trigger the second communication apparatus to measure the second sensing signal and/or used to trigger the second communication apparatus to transmit the second sensing report. For example, the trigger signaling may be carried in Downlink Control Information (DCI).

In an embodiment of the present application, the first sensing report may further include first configuration assistance information. The first configuration assistance information may be used for resource configuration for the second sensing signal.

For example, the first configuration assistance information may be used to indicate a desired configuration for the second sensing signal. Specifically, the second communication apparatus may determine the desired configuration for the second sensing signal based on the measurement result of the first sensing signal and inform the first communication apparatus via the first configuration assistance information, so that the second sensing signal is to be configured by the first communication apparatus in a more accurate and reasonable manner.

For example, the second communication apparatus may advise on the period of the second sensing signal to the first communication apparatus via the first configuration assistance information according to the speed of the target, so that the period of the second sensing signal may be more adapted to the moving speed of the target, thereby obtaining a more precise sensed speed.

In another embodiment of the present application, the first sensing report may include second configuration assistance information, where the second configuration assistance information may be used for configuration of the second sensing report. For example, the second configuration assistance information may be used to assist control information in the trigger signaling. The control information may include a window for measurement of the second sensing signal, etc.

S44, A second communication apparatus measures a second reference signal.

Specifically, the second communication apparatus measures the second reference signal in response to receiving the trigger signaling, and obtains a measurement result of the second reference signal.

S45, The first communication apparatus transmits a second sensing report to the second communication apparatus.

The specific contents of S44 and S45 may be found with reference to the related descriptions above, which will not be repeated herein.

From the above, in the solution of the present embodiment, when the first communication apparatus receives the first sensing report, it triggers the second communication apparatus to measure the second sensing signal and/or transmit the second sensing report, causing the second communication apparatus to report the sensing results in two stages. A preliminary sensing result is reported in the first stage, and a sensing result with high precision is reported in the second stage, facilitating the reduction of the overall overhead of resources of the sensing signals and the reduction of the complexity and power consumption of measurement for sensing.

More contents about the method for sensing shown in FIG. 4 may be found with reference to the related descriptions provided in other embodiments of the present document, and details are not repeated herein.

It should be noted that the various embodiments provided in the document may be used alone or in combination with each other to achieve different technical effects.

It may be understood that in a specific implementation, the above methods may be implemented in the form of software programs, which are executed on a processor integrated within a chip or chip module. Or the methods may be implemented by hardware or a combination of hardware and software, for example, a dedicated chip or chip module, or a dedicated chip or chip module combined with a software program.

Referring to FIG. 5, FIG. 5 is a schematic diagram of structure of a communication apparatus according to an embodiment of the present application. The communication apparatus shown in FIG. 5 may be deployed in the above first communication apparatus or the fourth communication apparatus. The apparatus shown in FIG. 5 may include:
A communication module 51, configured to receive a first sensing report, wherein the first sensing report is reported in response to at least one measurement result of a first sensing signal satisfying a condition for reporting.

In a specific implementation, the communication apparatus shown in FIG. 5 may correspond to a chip with functions of communication and/or sensing in the first communication apparatus or the fourth communication apparatus, or may correspond to a chip or chip module with functions of communication and/or sensing in the first communication apparatus or the fourth communication apparatus, or may correspond to the first communication apparatus or the fourth communication apparatus.

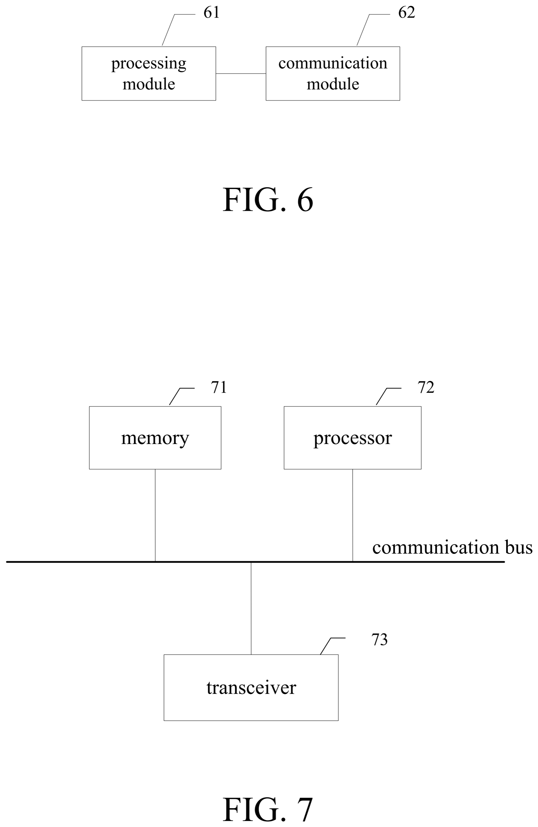

Referring to FIG. 6, FIG. 6 is a schematic diagram of structure of a communication apparatus according to an embodiment of the present application. The communication apparatus shown in FIG. 6 may be deployed in the second communication apparatus or the third communication apparatus. The apparatus shown in FIG. 6 may include:
A processing module 61 configured to measure a first sensing signal.

A communication module 62 configured to transmit a first sensing report in response to at least one measurement result of the first sensing signal satisfying a condition for reporting.

In a specific implementation, the communication apparatus shown in FIG. 6 may correspond to a chip with functions of communication and/or sensing in the second communication apparatus or the third communication apparatus, or may correspond to a chip or chip module with functions of communication and/or sensing in the second communication apparatus or the third communication apparatus, or may correspond to the second communication apparatus or the third communication apparatus.

More contents such as the operation principles, operation methods, and beneficial effects of the communication apparatus in the embodiments of the present application may be found with reference to the above related descriptions regarding the method for sensing, which will not be repeated herein.

An embodiment of the present application also provides a computer-readable storage medium having computer programs stored thereon, and the computer programs, when executed by a processor, perform the above methods for sensing. The storage medium may include ROM, RAM, magnetic disk, or optical disk, etc. The storage medium may also include non-volatile memory or non-transitory memory, etc.

An embodiment of the present application further provides a communication apparatus, including a memory and a processor. The memory has computer programs, capable of being executed on the processor, stored thereon. The computer programs, when being executed by the processor, perform the steps of the above methods for sensing.

Referring to FIG. 7, FIG. 7 is a schematic diagram of hardware structure of a communication apparatus according to an embodiment of the present application. The communication apparatus shown in FIG. 7 includes a memory 71, a processor 72, and a transceiver 73. The processor 72 is coupled to the memory 71 and the transceiver 73. The memory 71 may be located inside or outside a terminal. The memory 71, the processor 72, and the transceiver 73 may be connected via a communication bus. The transceiver 73 is configured to communicate with other devices or communication networks.

Alternatively, the transceiver 73 may be a transmitter. The memory 71 stores computer programs executable by the processor 72. The computer programs, when being executed by the processor 72, cause the transceiver 73 to perform the steps in the methods provided in the above embodiments.

The communication apparatus shown in FIG. 7 may be the above first communication apparatus or the fourth communication apparatus, or the communication apparatus shown in FIG. 7 may also be the second communication apparatus or the third communication apparatus. It should be understood that in the embodiments of the present application, the processor may be a Central Processing Unit (CPU). The processor may also be another general-purpose processor, a Digital Signal Processors (DSP), an Application Specific Integrated Circuit (ASIC), a Field Programmable Gate Array (FPGA), or another programmable logic device, a discrete gate or a transistor logic device, a discrete hardware component, etc. A general-purpose processor may be a microprocessor, or the processor may be any conventional processor, etc.

It should also be understood that the memory in the embodiments of the present application may be volatile memory or non-volatile memory, or may include both volatile and non-volatile memory. Non-volatile memory may be Read-Only Memory (ROM), Programmable Read-Only Memory (PROM), Erasable Programmable Read-Only Memory (EPROM), Electrically Erasable Programmable Read-Only Memory (EEPROM), or flash memory. Volatile memory may be Random Access Memory (RAM), which is used as external cache. By way of example but not limitation, many forms of RAM are available, such as Static Random Access Memory (SRAM), Dynamic Random Access Memory (DRAM), Synchronous Dynamic Random Access Memory (SDRAM), Double Data Rate Synchronous Dynamic Random Access Memory (DDR SDRAM), Enhanced Synchronous Dynamic Random Access Memory (ESDRAM), SynchLink Dynamic Random Access Memory (SLDRAM), and Direct Rambus Random Access Memory (DR RAM).

The above embodiments may be implemented in whole or in part in software, hardware, firmware, or any other combination thereof. When implemented using software, the above embodiments may be implemented in whole or in part in the form of a computer program product. The computer program product includes one or more computer instructions or computer programs. When the computer instructions or computer programs are loaded and executed on a computer, the processes or functions described in the embodiments of the present application are generated in whole or in part. The computer may be a general-purpose computer, a special-purpose computer, a computer network, or other programmable devices. The computer program may be stored in a computer-readable storage medium or transmitted from one computer-readable storage medium to another computer-readable storage medium. For example, the computer program may be transmitted from a website, computer, server, or data center to another website, computer, server, or data center via wired (e.g., coaxial cable, optical fiber, Digital Subscriber Line (DSL)) or wireless (e.g., infrared, wireless, microwave, etc.) means.

It should be understood that in the various embodiments of the present application, the numbers of the processes do not imply the order of execution. The perforation order of the processes should be determined by their functions and internal logic, and should not constitute any limitation on the implementation process of the embodiments of the present application.

In the several embodiments provided in the present application, it should be understood that the disclosed methods, apparatuses, and systems may be implemented in other ways. For example, the apparatus embodiments described above are merely illustrative; for example, the division of units is only a logical function division, and in actual implementation, there may be other division methods; for example, multiple units or components may be combined or integrated into another system, or some features may be ignored or not executed. In addition, the coupling or direct coupling or communication connection between each other shown or discussed may be indirect coupling or communication connection through some interfaces, apparatuses, or units, and may be electrical, mechanical, or other forms.

The units described as separate components may or may not be physically separated, and the components displayed as units may or may not be physical units, that is, they may be located in one place, or may be distributed to multiple network units. Some or all of the units may be selected according to actual needs to achieve the purpose of the solutions of the embodiments.

In addition, the functional units in the various embodiments of the present application may be integrated into one processing unit, or each unit may exist alone physically, or two or more units may be integrated into one unit. The above integrated units may be implemented in the form of hardware or in the form of hardware plus software functional units. For example, for apparatuses or products applied to or integrated into a chip, each module/unit included may be implemented in hardware such as circuits, or at least some modules/units may be implemented in software programs executing on a processor integrated into the chip, and the remaining (if any) modules/units may be implemented in hardware such as circuits; for apparatuses or products applied to or integrated into a chip module, each module/unit included may be implemented in hardware such as circuits, and different modules/units may be located in the same component (e.g., chip, circuit module, etc.) or different components of the chip module, or at least some modules/units may be implemented in software programs executing on a processor integrated inside a chip module, and the remaining (if any) modules/units may be implemented in hardware such as circuits; for apparatuses or products applied to or integrated into a terminal, each module/unit included may be implemented by circuits or other hardware means, different modules/units may be located in the same component (e.g., chip, circuit module, etc.) or different components of the terminal, or at least some modules/units may be implemented in software programs executing on a processor integrated into the terminal, and the remaining (if any) modules/units may be implemented in hardware such as circuits.

The integrated units implemented in the form of software functional units may be stored in a computer-readable storage medium. The software functional units are stored in a storage medium and include several instructions to cause a computer device (which may be a personal computer, server, or network device, etc.) to perform some of the steps of the methods described in the various embodiments of the present application. The aforementioned storage medium includes a medium that may store program code, such as U disk, mobile hard disk, Read-Only Memory (ROM), Random Access Memory (RAM), magnetic disk, or optical disk, and the like.

It should be understood that, in the present application, the term "and/or" merely describes a relationship between related objects, indicating that there may be three relationships. For example, A and/or B may indicate: A alone, both A and B, or B alone. In addition, the character "/" in the specification indicates that the related objects before and after it are in an "or" relationship.

The term "a plurality of" in the embodiments of the present application means two or more.

The descriptions such as first and second in the embodiments of the present application are for purposes of illustration and distinguishing of the described objects, there is no sequential order, and do not represent any special limitation on the number of devices in the embodiments of the present application, and may not constitute any limitation on the embodiments of the present application.

Although the present application is disclosed as above, the present application is not limited thereto. Any person skilled in the art may make various changes and modifications without departing from the spirit and scope of the present application. Therefore, the protection scope of the present application shall be subject to the scope defined by the claims.

## Claims

1. A method for sensing, **characterized in that** the method comprises:
measuring a first sensing signal; and
transmitting a first sensing report in response to at least one measurement result of the first sensing signal satisfying a condition for reporting.

2. The method for sensing according to claim 1, **characterized in that** the method further comprises:
measuring a second sensing signal; and
transmitting a second sensing report, wherein the second sensing report comprises a measurement result of the second sensing signal.

3. The method for sensing according to claim 2, **characterized in that** before the measuring the second sensing signal, the method further comprises:
receiving a trigger signaling, the trigger signaling for triggering the measurement of the second sensing signal and/or the transmission of the second sensing report.

4. The method for sensing according to any one of claims 1 to 3, **characterized in that** the first sensing report comprises at least one of:
time of arrival of at least one sensing signal of the first sensing signal or difference in time of arrival of sensing signals of the first sensing signal;
angle of arrival of at least one sensing signal of the first sensing signal;
information on doppler of at least one sensing signal of the first sensing signal;
information on resource index of at least one sensing signal of the first sensing signal;
information on quality of channel corresponding to at least one sensing signal of the first sensing signal; and
time of measurement corresponding to the first sensing report.

5. The method for sensing according to claim 4, **characterized in that** the first sensing report further comprises:
configuration assistance information, the configuration assistance information for assisting resource configuration of a second sensing signal and/or configuration of a second sensing report.

6. The method for sensing according to any one of claims 2 to 5, **characterized in that** the second sensing report comprises at least one of:
time of arrival of at least one sensing signal of the second sensing signal or difference in time of arrival of sensing signals of the second
sensing signal;
angle of arrival of at least one sensing signal of the second sensing signal;
information on doppler of at least one sensing signal of the second sensing signal;
information on resource index of at least one sensing signal of the second sensing signal;
information on quality of channel corresponding to at least one sensing signal of the second sensing signal; and
time of measurement corresponding to the second sensing report.

7. The method according to claim 2, **characterized in that** the second sensing signal satisfies at least one of:
the second sensing signal and the first sensing signal are the same or different;
overhead of resources of the second sensing signal is greater than that of the first sensing signal;
a bandwidth of the second sensing signal is greater than that of the first sensing signal;
a density in frequency domain of the second sensing signal is greater than that of the first sensing signal;
a duration of the second sensing signal is greater than that of the first sensing signal; and
a gap in time domain of the second sensing signal is less than that of the first sensing signal.

8. A method for sensing, **characterized in that** the method comprises:
receiving a first sensing report, wherein the first sensing report is reported in response to at least one measurement result of a first sensing signal satisfying a condition for reporting.

9. The method for sensing according to claim 8, **characterized in that** the method further comprises:
receiving a second sensing report, wherein the second sensing report comprises a measurement result of a second sensing signal.

10. The method for sensing according to claim 9, **characterized in that**, before the receiving the second sensing report, the method further comprises:
transmitting a trigger signaling, the trigger signaling for triggering the measurement of the second sensing signal and/or the transmission of the second sensing report.

11. The method for sensing according to any one of claims 8 to 10, **characterized in that** the first sensing report comprises:
time of arrival of at least one sensing signal of the first sensing signal or difference in time of arrival of sensing signals of the first sensing signal;
angle of arrival of at least one sensing signal of the first sensing signal;
information on doppler of at least one sensing signal of the first sensing signal;
information on resource index of at least one sensing signal of the first sensing signal;
information on quality of channel corresponding to at least one sensing signal of the first sensing signal; and
time of measurement corresponding to the first sensing report.

12. The method for sensing according to claim 11, **characterized in that** the first sensing report further comprises:
configuration assistance information, the configuration assistance information for assisting resource configuration of a second sensing signal and/or configuration of a second sensing report.

13. The method according to any one of claims 9 to 12, **characterized in that** the second sensing report comprises at least one of :
time of arrival of at least one sensing signal of the second sensing signal or difference in time of arrival of sensing signals of the second sensing signal;
angle of arrival of at least one sensing signal of the second sensing signal;
information on doppler of at least one sensing signal of the second sensing signal;
information on resource index of at least one sensing signal of the second sensing signal;
information on quality of channel corresponding to at least one sensing signal of the second sensing signal; and
time of measurement corresponding to the second sensing report.

14. The method according to claim 10, **characterized in that** the second sensing signal satisfies at least one of:
the second sensing signal and the first sensing signal are the same or different;
overhead of resources of the second sensing signal is greater than that of the first sensing signal;
a bandwidth of the second sensing signal is greater than that of the first sensing signal;
a density in frequency domain of the second sensing signal is greater than that of the first sensing signal;
a duration of the second sensing signal is greater than that of the first sensing signal; and
a gap in time domain of the second sensing signal is less than that of the first sensing signal.

15. A communication apparatus, comprising:
a processing module configured to measure a first sensing signal; and
a communication module configured to transmit a first sensing report in response to at least one measurement result of the first sensing signal satisfying a condition for reporting.

16. A communication apparatus, comprising:
a communication module configured to receive a first sensing report, wherein the first sensing report is reported in response to at least one measurement result of a first sensing signal satisfying a condition for reporting.

17. A computer-readable storage medium, having computer programs stored thereon, **characterized in that**, the computer programs, when being executed by a processor, cause the method for sensing according to any one of claims 1 to 7 to be performed or the method for sensing according to any one of claims 8 to 14 to be performed.

18. A communication apparatus, comprising a memory and a processor, wherein the memory stores computer programs executable by the processor thereon, **characterized in that**, the computer programs, when being executed by the processor, cause the steps of the method for sensing according to any one of claims 1 to 7 to be performed.

19. A communication apparatus, comprising a memory and a processor, wherein the memory stores computer programs executable by the processor thereon, **characterized in that**, the computer programs, when being executed by the processor, cause the steps of the method for sensing according to any one of claims 8 to 14 to be performed.
